(19) Europäisches Patentamt
European Patent Office
Office européen des brevets

(11) **EP 3 243 954 B1**

(12) **EUROPEAN PATENT SPECIFICATION**

(45) Date of publication and mention
of the grant of the patent:
**30.01.2019 Bulletin 2019/05**

(51) Int Cl.:
**D06F 75/22** *(2006.01)*          **D06F 58/22** *(2006.01)*

(21) Application number: **16382210.9**

(22) Date of filing: **11.05.2016**

(54) **HOUSEHOLD APPLIANCE WITH A FUNCTIONALLY COATED MESH SIEVE, MESH SIEVE USED THEREIN AND PROCESS FOR THE MANUFACTURE OF THE MESH SIEVE**

HAUSHALTSGERÄT MIT EINEM FUNKTIONELL BESCHICHTETEN MASCHENSIEB, MASCHENSIEB UND VERFAHREN ZUR HERSTELLUNG DES MASCHENSIEBS

APPAREIL MÉNAGER COMPORTANT UN TAMIS À MAILLES À REVÊTEMENT FONCTIONNEL, TAMIS MAILLÉ UTILISÉ ET PROCÉDÉ DE FABRICATION ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**15.11.2017 Bulletin 2017/46**

(73) Proprietors:
 • **BSH Hausgeräte GmbH**
  **81739 München (DE)**
 • **BSH Electrodomésticos España, S.A.**
  **50016 Zaragoza (ES)**

(72) Inventors:
 • **Artal Lahoz, María Carmen**
  **50007 Zaragoza (ES)**

 • **Bömmels, Ralf**
  **14612 Falkensee (DE)**
 • **Escartín Barduzal, Andrés**
  **50009 Zaragoza (ES)**
 • **Hennig, Holger**
  **12249 Berlin (DE)**
 • **Martin, Lorena**
  **50008 Zaragoza (ES)**
 • **Martinez Solanas, Elena**
  **50015 Zaragoza (ES)**
 • **Tejedor Recio, Leyre**
  **500 Zaragoza (ES)**
 • **Urrutia Angos, David**
  **50009 Zaragoza (ES)**

(56) References cited:
  **DE-A1-102009 046 921    DE-A1-102011 089 114**
  **US-A1- 2010 154 240**

## Description

The invention relates to a household appliance with a functionally coated mesh sieve, a coated mesh sieve used therein and a process for the manufacture of the coated mesh sieve. The invention relates in particular to a household appliance containing a coated mesh sieve in a process water duct or a process air duct, wherein the coated mesh sieve comprises a basic sieve material in the form of wires; and a hydrophobic or hydrophilic coating provided on the basic sieve material.

Domestic appliances such as washing machines, tumble dryers, combined washer-dryers or dishwashers often contain a mesh sieve for cleaning a process medium. For example, dryers usually have a mesh sieve which is arranged in a process air duct leading away from the drum to prevent fluffs, hairs and fuzzes to pass through the appliance. Namely, if laundry is dried in a drum within the drum housing, matter, in particular lint, is led away from the laundry with the process air in the process air duct. To this end, a mesh sieve is used to filter such lint out of the process air so that the lint is prevented from entering a condenser, a heating device or a fan arranged downstream thereof. This mesh sieve may get blocked with these fluffs after several cycles such that a user has to remove the mesh sieve and clean it manually. Recently, dryers have been proposed which include a system which uses the condensed water of a heat exchanger in a condensation-type dryer to produce a shower over the mesh sieve that eliminates the fluffs from the mesh sieve. However, even then the showering with water can lead to a clogging of the meshes of the filter after many cycles. Furthermore fluffs still can get adhered to the filter mesh. Other household appliances may also contain a mesh sieve filter. Filters in a drainage outlet are known for instance in washing machines or dishwashers. Mesh sieves of this type can typically be removed from the outside of the domestic appliance by way of an access and cleaned so as to remove lint adhering to the filter.

To ensure that the adhesive forces of the lint on the mesh sieve are reduced, the basic sieve material is advantageously provided with a hydrophobic coating. The lint mesh sieves usually used in tumble dryers consist of a plastic fabric, which is provided with a hydrophobic coating. At a temperature of about 160°C, the coating is usually fixed during a period of 1 to 2 minutes. This low temperature and the short fixing time are needed to prevent damage from the plastic fabric as a result of too much heating since the plastic is often not durably resistant at this temperature. The low temperature and short fixing time are disadvantageous in that the adhesive forces of foreign bodies on the plastic fabric of the filter cannot be sufficiently reduced, thereby complicating the cleaning of the foreign bodies by means of a cleaning liquid.

The publication US 2005/0252022 A1 discloses an independent lint collector for collecting particles in air, which includes an air inlet, in order to enable the particles to enter the lint collector, and a base which is disposed to increase the speed of the air particles and to limit the same as a result of a centrifugal force. The air inlet is connected to a dryer. The base, for example made of aluminum, can comprise a non-stick-coating.

The publication WO 2008/077394 A2 discloses a structured material web, in particular material web, for separating a fluid from solids with a multi-dimensional structuring, which comprises bulges or folds as well as structures arranged adjacent to one another and formed in each instance in a surface section enclosed by the bulges or folds, with each of the structures having a distinguished location with a hole and the surface sections being formed in each other location of the structure and an incline toward the distinguished location. The material web can be made from a meshed grid, a fabric or a textile. The material can comprise a non-stick coating on its surface or a non-stick surface, in particular according to the Lotus effect. The material web can consist of a meshed grid or fabric and/or textile of the following group of materials: metal fibers, plastic fibers, natural fibers, carbon fibers and glass fibers as well as cardboard and paper, a meshed grid, e.g. made of stainless steel or fabric. The material web can be used for a drum of a laundry treatment machine or also for a filter wall.

The publication EP 1 674 535 A1 relates to self-cleaning surfaces with improved mechanical stability and a method for the manufacture thereof. To this end self-cleaning, hydrophobically structured surfaces are manufactured, which have mixtures of particles fixed on their surface, the structure directing particles being selected from semi-metal or metal oxides, silicic acid and metallic powders and wax particles. Surfaces which are structured by such a particle mixture have a greater mechanical stability of the structure and are therefore particularly advantageous for the manufacture of self-cleaning surfaces which are exposed to greater mechanical stresses, like for example the surfaces of tarpaulin, marquees, greenhouse, greenhouse elements, conservatories or HGV tarpaulins. The wax particles are nevertheless unsuited to use in lint filters since the wax particles would adulterate the comparatively fine meshes during application.

The publication EP 0 825 230 A1 relates to a thermosetting polymethyl silsesquioxane compound, which uses polymethyl silsesquioxane obtained from cost-effective precursors and provide a hard, scratch-resistant, highly corrosion-resistant, water-repellent and transparent hardened thin layer. The thermosetting polymethyl silsesquioxane compound includes a polymethyl silsesquioxane with the general formula $(CH_3SiO_{3/2})_n(CH_3Si(OH)O_{2/2})_m$, wherein n and m satisfy specific requirements, and a predetermined number average molecular weight $M_n$ from 380 to 2000, and colloidal silica. These thin layers have been applied to planar carriers made of glass, aluminum or steel with a layer thickness of 6 $\mu$m and indicate a contact angle relative to water of approximately 120°.

The publication US 2008/0276656 A relates to a drum-type washer dryer wherein a filter is arranged in a down-stream duct between the drum and a fan and on an upstream side of the air flow, which is generated in a drying process by the fan. The filter is arranged such that it is saturated by water which is introduced into the water tank during the washing or rinsing process. In one embodiment, the washer-dryer also has a cleaning unit for generating a flow of water and as a result moving foreign bodies which have adhered to the filter unit. Aside from metal wires, synthetic resin wires and the like are conceivable as wires which form the filter. However, metal wires are preferred because they have smooth surfaces and do not attract lint, thread sections and the like. Fixing the crossing of wire meshes, e.g. by means of synthetic resin coating of a cellular woven metallic yarn, prevents problems occurring such as changing the opening size of meshes which are caused by foreign bodies getting caught between the crossing wires, by displacing the crossings or the like. A coating is not disclosed since the metal wires are already regarded as sufficiently smooth.

The publication EP 2 202 348 A2 discloses a domestic appliance filter for use in a laundry treatment device comprising: a basic filter material with a hydrophobic coating for filtering out matter from a process water duct or a process air duct, wherein the basic filter material comprises a material which is resistant to temperatures of 160°C or more and wherein the hydrophobic coating on the basic filter material effects a surface energy of less than 35 mN/m. The filter comprises preferably a metal, in particular aluminum, stainless steel or a fabric.

The publication DE 10 2011 089 114 A1 describes a structural member of a household appliance that is wetted by a liquid and which is provided at its surface coming into contact with the liquid with an at least hydrophobically acting coating that is formed as a liquid boundary layer that consists of a substrate and a boundary liquid deposited therein, and whereby the boundary liquid forms against a liquid which wets the structural member a sliding layer which repels the liquid. In an embodiment, the substrate is produced by means of etching, laser structuring, corroding, plasma treatment or structured growth.

The publication DE 10 2009 046 921 A1 describes a dryer with a drying chamber for accepting humid goods and an essentially closed process air channel for the circulation of process air through the drying chamber. A first fluff filter is provided in between the drying chamber and the heat sink for catching fluff from the process air. The first fluff filter preferably provides a filter cloth which is fixed on a carrier, whereby the filter cloth has hydrophobic, dirt repulsing and/or antibacterial properties which may be imparted to the filter cloth by means of a suitable coating which might be formed in a known manner by impregnation or plasma coating.

The publication US 2010/0154240 A1 describes a laundry dryer, comprising a stationary filter for filtering-out fluff from a process air stream flowing through a process air channel of the laundry dryer, the filter in a compartment inclined at an angle relative to a through-flowing process air stream and including a cleaning opening in an upper region of the filter for directing cleaning liquid onto a filter surface of the filter; and a cleaning device for cleaning of the filter.

In view of this situation it is an object of the present invention to provide a household appliance with a mesh sieve in a process water duct or a process air duct whereby the mesh sieve can be easily cleaned and/or which is less prone to contamination. It is moreover an object of the present invention to provide a mesh sieve for a process water duct or a process air duct in a household appliance, and a process for the manufacture of the mesh sieve.

In accordance with the present invention, this object is achieved by a household appliance, a coated mesh sieve and a process for the manufacture of the coated mesh sieve with the features of the independent claims. Preferred embodiments of the invention are detailed in the respective dependent claims. Preferred embodiments of the household appliance correspond to preferred embodiments of the coated mesh sieve, even if they are not referred to herein in detail.

The invention is thus directed to a household appliance containing a coated mesh sieve in a process water duct or a process air duct, in particular for filtering out matter from the process water or process air, wherein the coated mesh sieve comprises (a) a basic sieve material in the form of wires; and (b) a hydrophobic or hydrophilic coating provided on the basic sieve material, wherein the hydrophobic or hydrophilic coating, preferably a superhydrophobic or superhydrophilic coating, is provided on a pretreated surface of the basic sieve material, and wherein the pretreated surface of the basic sieve material is obtained by treating a metal as basic sieve material with a cleaning solution containing an inorganic and/or organic chemical compound, or by treating an organic polymer as basic sieve material with laser beams.

The term "wire" as used herein has a broad meaning. "Wire" thus refers to wires as such which are often made from a metal, but also to fibers which are usually made from an organic material, in particular an organic polymer.

In a preferred embodiment of the household appliance, the basic sieve material is a metal. The basic sieve material can be made from various metals as long as the metal can be used in a mesh sieve in a process water duct or a process air duct. Preferably, the metal is stainless steel.

In a preferred alternative embodiment of the household appliance, the basic sieve material is an organic polymer. The organic polymer is not limited as long as suitable fibers can be made from the organic polymer. Suitable organic polymers are for example polyamide, polypropylene, ABS polymers and polyesters. Preferably, a polyester, in particular an aromatic polyester is used. Most preferably, the basic sieve material is polyethyleneterephthalate (PET).

According to the invention a household appliance is preferred, wherein the basic sieve material contains essentially parallel wires, and wherein a distance D between the wires is from 50 to 150 $\mu$m, preferably from 65 to 130 $\mu$m, more preferably from 80 to 100 $\mu$m. It was found that this is especially also true when the basic sieve material is made from a steel mesh or a PET mesh.

A household appliance is moreover preferred, wherein a width W of the wires is in the range of from 10 to 70 $\mu$m, preferably of from 20 to 50 $\mu$m and most preferably of from 30 to 40 $\mu$m.

It was found particularly advantageous when a width $w_I$ of the wires is larger at an intersection of the wires as compared to a width $w_M$ in the middle between two intersections. The width of the wires increases preferably gradually from the middle between two intersections to each of these intersections.

In the household appliance of the present invention, the pretreated surface of the basic sieve material is obtained by treating a metal as basic sieve material with a cleaning solution containing an inorganic and/or organic chemical compound, or by treating an organic polymer as basic sieve material with laser beams.

The hydrophobic or hydrophilic coating has preferably a thickness in the range of from 100 nm to 30 $\mu$m, and more preferably in the range of from 200 nm to 20 $\mu$m.

A household appliance is preferred, wherein the hydrophobic or hydrophilic coating contains or consists of an inorganic or organic polymer selected from among $SiO_2$-derivatives, for example methylated silica in ethanol, polysiloxane-urethane inorganic-organic coatings, or silicone polyester in n-butyl acetate; fluoropolymers, for example ethylacetate fluoroalkyl functional waterborne oligosiloxane, ethyl and methyl nonafluorobutyl ether; $Al_2O_3$ derivatives, and $TiO_2$ derivatives.

The household appliance of the present invention is not limited as long as it contains a mesh sieve in a process water duct or a process air duct. Preferably however, the household appliance is a water-bearing household appliance. In general, a water-bearing household appliance is a household appliance during the operation of which water is used. The items to be treated by for example cleaning, drying or freshening can be, in particular, tableware or laundry items. The water-bearing household appliance is preferably selected from the group consisting of a washing machine, a washer-dryer, a dryer and a dish-washer. The water-bearing household appliance is most preferably a washer-dryer or a dryer.

A pretreated surface is in particular a surface which has been cleaned from deposited impurities and/or which has been structured or roughened. I.e., a pretreated surface is in general a cleaned and/or structured or roughened surface.

In general, the pretreatment of a mesh sieve, i.e. a basic sieve material, will differ depending on the type of material of the mesh sieve.

If the mesh sieve is made in a preferred embodiment from a metal, and in particular from stainless steel, the pretreatment can be conducted by cleaning with one of the following pretreatment agents. It has been found that a pretreatment can be effected by treating the surface with organic agents like for example acetone, methyl alcohol, ethyl alcohol, mineral spirits or, preferably in an aqueous solution, by phosphates, synthetic detergents, and alkalis. Preferably, a pretreatment agent does however not contain chlorine.

It is moreover advantageous to use one of the following commercially available more complex compositions as pretreatment agent. Namely, the TURCO® products T 4215 NC-LT, T-6849, W.O.1 and LIQUID SPRAYEZE NP LT from the company Henkel can be advantageously used for a pretreatment when the basic sieve material is a metal.

After treatment with in particular one of the above pretreatment agents, the pretreated basic sieve material is generally treated with distilled water and then dried using an air stream or an oven, preferably at a temperature of from 90 to 120°C during 5 to 20 minutes, for example at 110°C during 10 minutes.

T-6849 is a water based degreaser and as such a clear liquid, and formulated for the removal of dirt from workshop, for the removal of marking inks, protective oils, fats and other oils. T-6849 may replace a cleaning solvent in the vapor phase by a water-based cleaner effectively. The costs and hazards associated with the use of chlorinated solvents which are often used for cleaning may thus be greatly reduced.

4215 NC-LT is as such a white granular mix developed for cleaning ferrous and nonferrous alloys by spraying, immersion and ultrasonic methods at low temperatures. It is noncorrosive to aluminum, steel, copper and plated materials. It is readily soluble in water and may thus be used in aqueous solution. It can be used for effectively degreasing metallic surfaces. It has extraordinary properties derived from the total absence of silicate and an alkaline composition of extreme softness in this pretreatment agent. 4215 NC-LT can be used for immersion or spraying pretreatments. Another great advantage of this pretreatment agent is its ability to be used at average temperatures between 45°C and 55°C, thus saving energy by avoiding energy transport at high temperatures. Additionally, another advantage is the total absence of chromates which ensures easy removal of the solutions without deterioration or environmental discharge problems.

W.O.1 is an acidic product that cleans, deoxidizes and slightly passivates in one operation, providing an excellent base for good adhesion of the hydrophobic or hydrophilic coating described herein. W.O. No. 1 can be applied for example to ferrous surfaces, aluminum, and zinc. W.O. 1 is a clear, flammable and highly concentrated liquid. It carries corrosion inhibitors and wetting agents to ensure a uniform and effective action on the surface to be treated. At the same time it facilitates final rinses and provides a surface free of impurities.

LIQUID SPRAYEZE NP LT is a liquid that eliminates dirt, oils, waxes of steel, aluminium, copper and titanium. It is especially effective from 32 to 88°C. It can be used for example in a range from 3-10 vol% in water during a pretreatment period of 1-2 min with an aspersion pressure between 20-30 psi. Rinsing with water may be conducted to eliminate any residues.

The above discussed pretreatment agents can be applied in general by immersion of the substrate into the pretreatment agent as such or into a, preferably aqueous, solution in liquid state during for example 15 minutes. LIQUID SPRAYEZE NP LT is applied preferably by aspersion of the basic sieve material.

The pretreatment of a mesh sieve where the basis sieve material is polyethylene terephthalate (PET) is preferably carried out by a UV laser although other laser wavelengths might also be used. With the UV laser, PET meshes are activated and cleaned in that both a thermal treatment creating roughness and chemical changes are effected. The laser UV radiation only affects the surface and does not cause any damage to the bulk material of the mesh sieve. During laser treatment all four factors affecting adhesion can be met: cleaning, mechanical interlocking, chemical modification and increased wetting. A laser that can be used is for example a solid state UV laser with a wavelength of 355 nm, a power of 2W, and a pulsed time of 8 ns at 15 kHz. It is then possible to use a f511 lens and to obtain a spot of 27 $\mu$m. The laser equipment may be for example a Rofin Power Line E20 THG.

The speed of the beam during a laser pretreatment is preferably in the range of from 1000 mm/s onwards, for example 1100 mm/s, since lower speeds may result in a burning of a PET mesh. Moreover it has been found that higher speeds of the beam do not produce any effects. In order to obtain a homogenous distribution of dots, the hatch and the frequency should be preferably applied in a specific relationship. A beam is formed by pulses, and the distance of these pulses can be described by the equation:

$$\text{distance} = \text{speed} * (1/\text{frequency}).$$

The hatch is the distance between two parallel beams, and both distances have to be the same. A wide range of frequencies can be used because they have essentially the same effect.

The hydrophobic or hydrophilic coating (b) provided on the basic sieve material (a) is not limited as long as it can fulfill the object underlying the present invention. The coatings applied, and thus the coating agents which may be used, can be in general the same for both types of basic mesh sieve materials, i.e. metals and organic polymers. It was found however that the coating agent Plastic Defender can also be used for a PET mesh sieve. These coatings can have good adhesion in both types of mesh sieves in that their properties are conserved. Although each coating can have different functional groups, it is noted that in general all are preferably based on silicone and fluoropolymers. The thickness of the coating is in general preferably in the range of from 20 nm to 200 $\mu$m.

It was found that the coating agents that can be applied advantageously are for example the following coatings for stainless steel mesh sieves:
G-SYS HP100 from the company Nanosurface Solutions, Aluminium Defender from the company Diamond Fusion International, ECC7000 from the company 3M, Dynasylan® F8815 from the company Evonik or NPAS10 from the company ITN.

The coating can be achieved for example by dip-coating the pretreated basic mesh sieve material into the coating agent and curing the coating in a manner which depends on the type of the coating agent that has been used. These products can also be used in spraying applications with application pressures that range for example from 1 to 3.5 bar.

G-SYS HP100 shows stability and provides a high sliding angle for water droplets. On the other hand it withstands very well various pH conditions, cleaning processes, as well as any operation of the household appliance. This coating is a butanone based material that forms a protective water, oil and dirt repellent layer on surfaces. It is supplied by the company Nano Surface Solutions. G-SYS HP100 is sold ready to use. Once the pretreated basic mesh sieve materials are coated, they are in general cured during 1 h at 100°C.

The coating agent Aluminium Defender is very stable and provides a high sliding angle for water droplets. On the other hand it withstands very well various pH conditions, cleaning processes, as well as any operation of the household appliance. A coating with this coating agent, based in aliphatic hydrocarbon, is recommended by the company DFI as hydrophobic due to its repellence to water, dirt and oil. It is useful for all types of aluminum and chrome substrates. This product is sold ready to use. Once a pretreated basic mesh sieve material is coated, the coating is in general cured during 1h at 100°C.

The coating agent ECC7000 is also stable and has a high sliding angle of water droplets. On the other hand it withstands very well different pH conditions, cleaning processes, and operation conditions.

3M™'s Easy Clean Coating ECC-7000 is an air-dried, clear, colorless treatment for ceramic tiles, sanitary fixtures and glass surfaces that can however be used advantageously also for the mesh sieves of the present invention to provide an "easy to clean" performance. It is a fluoropolymer that will react with the surface of the pretreated mesh sieve to create a low surface energy coating that is not easily wetted with liquids. The coating is stable and cannot be removed except by harsh cleaners or reagents, such as abrasive cleaners. The coating agent may be prepared as follows:

> i. Mixing of 990 g ethanol with 2 g of 18% aqueous HCl and 8 g of ECC-7000, until the solution is slightly muddy;
> ii. coating the pretreated basic mesh sieve material; and
> iii. curing of the coating for 1 h at 100°.

Dynasylan® F8815 may also be used as a coating agent. It withstands very well different pH conditions, cleaning processes, and shows a signficant resistance to temperature fluctuations. Using water as solvent is more cost-effective. Dynasylan® F8815 is a fluoroalkyl functional water-borne oligosiloxane which acts as a surface modification agent on oxidic, carboxy- and hydroxyfunctional substrates for example ceramic, natural fibers like cotton or leather, but which can be also used for the present invention. It is a yellowish, slightly turbid liquid. Dynasylan® F8815 can be mixed with water to any desired concentration. For preparing and using this coating agent the following process steps may be conducted:

> i. Preparing a 4.8% solution of Dynasylan®F8815 in water or methanol;
> ii. coating of the pretreated basic mesh sieve material; and
> iii. curing 1 h at 100°.

The commercially available composition TNP AS 10 ITN from the company ITN may also be used as coating agent. It is stable under temperature fluctuations and under the operating conditions in the household appliance. This composition is a silicone polyester resin which is used in general as a coating to cover baking trays due to its easy to clean properties and its detergent resistance. For preparing a suitable coating solution, TNP AS 10 ITN can be diluted for example in a ratio of 1:10 in n-butyl acetate and a pretreated coated basic sieve material can be suitably cured at 100°C for 1 h.
The coatings for the case that the mesh sieve is made from an organic polymer can be the same or different. The following coating agents have been found particularly useful for coating PET mesh sieves in that they impart the desired properties: G-SYS HP100, Aluminium and Plastic Defender from the company Diamond Fusion International, ECC7000 from the company 3M and F8815 from the company Evonik. A conventional preparation of a coating on a basic sieve material is by dip-coating. The curing of the coating will depend on the used coating agent. It is noted that the coating agent Plastic Defender is only used for basic mesh sieve materials which are made from an organic polymer, in particular PET. It is noted moreover that coating can be achieved with these coating agents also in spraying applications with application pressures ranging from 1 to 3.5 bar.

The coating agent Plastic Defender has a high stability and has a high sliding angle of water droplets. On the other hand it withstands very well different pH conditions, cleaning processes, as well as the operation conditions in the household applicances of the present invention. This coating agent, based on aliphatic hydrocarbons, is recommended by DFI as hydrophobic due to its repellence to water, dirt and oil. It may be used for many different types of plastics and thus mesh sieves made from organic polymers. The coating agent Plastic Defender is commercially available ready to use. Once the mesh sieves are coated, they can be preferably cured for 0.5 to 2 h at a temperature of from 80 to 120°C, for example for 1h at 100°C.
The invention is moreover directed to a coated mesh sieve for a process water duct or a process air duct in a household appliance, wherein the coated mesh sieve comprises (a) a basic sieve material; and (b) a hydrophobic or hydrophilic coating provided on the basic sieve material, wherein the hydrophobic or hydrophilic coating is provided on a pretreated surface of the basic sieve material, and wherein the pretreated surface of the basic sieve material is obtained by treating a metal as basic sieve material with a cleaning solution containing an inorganic and/or organic chemical compound, or by treating an organic polymer as basic sieve material with laser beams.
In addition, the invention is directed to a process for the manufacture of a coated mesh sieve for a process water duct or a process air duct in a household appliance, wherein the coated mesh sieve comprises basic sieve material and a hydrophobic or hydrophilic coating provided on a pretreated surface of the basic sieve material, comprising the steps:

> (i) providing a mesh sieve made from (a) a basic sieve material (a);
> (ii) pretreating the surface of an organic polymer as the basic sieve material (a) with laser beams or the surface of a metal as the basic sieve material with a cleaning solution;
> (iii) allowing the pretreated surface to dry and/or harden; and
> (iv) coating the pretreated surface resulting from step (iii) with an inorganic or organic polymer.

In general, the coating of the coated pretreated basic sieve material is also allowed to dry and/or harden. Accordingly, in general, after the coating step, the coating is dried and/or cured.
The pretreatment is very important for the reliability of and durability of the coatings. In accordance with the present invention, the coating is most preferably either a super-hydrophobic coating or a super-hydrophilic coating. A super-hydrophobic coating can help the water from a shower to slip over the mesh and drain fluffs. On the other hand, a super-hydrophilic coating can form a water film in which the fluffs can slip without touching or tangling the mesh.

In a preferred process, the coating in step (iv) is effected by dip-coating, spraying, coil-coating or atmospheric pressure plasma.

The household appliance of the present invention provides a number of advantages when it is operated, especially when it is used for the treatment of items which are placed in a suitable treatment chamber provided therein.

If the household appliance is a dryer, an improved drying process can be carried out therein. Namely, due to the avoidance of a clogging of the coated mesh sieve as used according to the invention, a flushing of the mesh sieve is possible even during the drying process without any disadvantages. The duration of a drying process and the specific energy consumption depend among others on the process air flow in the process air duct. A reduction of the process air flow leads to an undesired extension of the drying process duration and an increase of the specific energy consumption. Since the reduction of the process air volume flow during the drying process is caused by the accumulation of fluff, a cleaning of the filter by flushing during a drying process leads to a regeneration of the mesh sieve and therefore to an increase of the volume flow.

The present invention thus provides also a drying process, wherein the coated mesh sieve is cleaned by contacting it at least one time during the drying process with a cleaning liquid, for example condensate and/or water which may contain also a cleaning additive. The cleaning step may be initiated by a user or automatically. In both cases an optional sensor can measure the quality of the process air flow and determine as to when a cleaning might be useful or should be performed.

The household appliance of the present invention comprises in general also an optical and/or acoustic display device which allows the user of the household appliance the display of for example operational parameters and/or the expected duration of a treatment process conducted therein. Preferably, an optical display device is used. If the household appliance is a dryer, the display device might perhaps provide information on the operation of the dryer through the display of a text or the flashing of light emitting diodes (LEDs) which might have also different colours, for example an indication of an intermediate flushing of the mesh sieve during a drying process or an advice for the user that the mesh sieve should now be flushed by an action of the user.

The use of the coated mesh sieve described herein helps in the prevention of fluffs to get adhered to the mesh sieve as well as in the prevention of the mesh sieve clogging due to water showering.

The flushing of a mesh sieve in a dryer is however not limited to a point in time during the drying process. It can also be done before or after a drying process. The time at which a cleaning, in particular a flushing, of the mesh sieve will be effected generally depends also on the aqueous liquid that is used for the cleaning and in particular flushing step.

The aqueous liquid used will be in general condensate from a drying process and/or water from a water supply system. To this end the dryer is a condensation dryer wherein a condensate tray is provided under a condenser to collect water, i.e. condensate, which is obtained through the cooling of hot humid air stemming from a drum of the dryer which serves as a container for items to be dried in the dryer. The condensate is then usually pumped to a condensate container, generally in the upper part of the dryer, where it can be stored to be used later on, for example for cleaning the condenser and/or a mesh sieve.

The dryer as an embodiment of the household appliance of the present invention may thus also contain a flushing device for cleaning the mesh sieve. The dryer then in general contains also a nozzle as a part thereof, since an aqueous liquid that is used as the cleaning liquid for the mesh sieve is usually transported through a suitable nozzle on the mesh sieve.

The present invention has several advantages. The household appliance and in particular the coated mesh sieve used therein can be cleaned in an improved way as compared to non-coated mesh sieves. Since the coating is present on a pretreated surface, the adhesion of the coating can be significantly improved.

When the household appliance is a dryer, a drying process performed therein can be improved by means of a regeneration of the mesh sieve by flushing it during the drying process, because clogging by water is avoided. A higher air flow rate, i.e. a lower pressure loss, can be achieved because of the improved cleaning behavior. The invention helps moreover in the prevention of fluffs to get adhered to the filter mesh.

In general, the invention allows an improved maintenance of the household appliance and better energy efficiency during the life-time of the household appliance since an air or water flow is kept on a high level.

The invention provides a durable functionality and an improved convenience because of a rarer necessity to manually clean the filter mesh. As a result thereof, water and detergent which are used for such a cleaning procedures may be saved.

Preferred embodiments of the invention will now be described below by referring to Figures 1 to 3 of the attached drawing.

Fig. 1 shows a schematic drawing of a dryer in side view as a non-limiting embodiment for the household appliance of the present invention, whereby the dryer is here a heat pump dryer.

Fig. 2 shows the basic mesh sieve material of a mesh sieve according to the invention before pretreatment, wherein the basic mesh sieve material is polyethyleneterephthalate.

Fig. 3 shows the basic mesh sieve material of Fig. 2 after a pretreatment by laser ablation has been carried out.

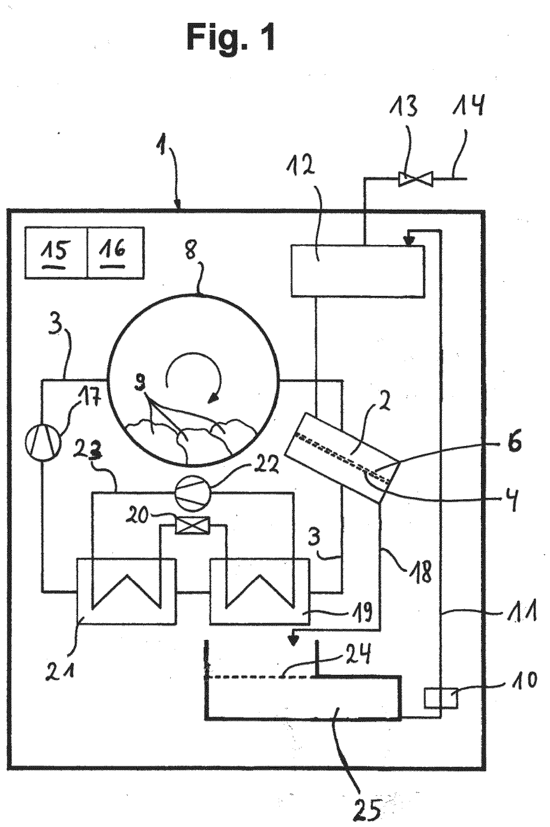

Fig. 1 shows a schematic drawing with a side view on a dryer 1 as an embodiment for the household appliance of the present invention, whereby the dryer 1 is here a heat pump dryer with an evaporator 19, a throttle 20, a liquefier 21 and a compressor 22. However, other household appliances, in particular also other types of dryers, can be used. Dry process air in a process air duct 3 is heated in the liquefier 21 and then transported by means of a process air blower 17 into the container 8 where it passes through the wet laundry items 9. The hot and humid process air leaves the container 8 and is led through a coated mesh sieve 2 to the evaporator 19 in the process air circuit 3. In the evaporator 19 the humidity in the hot and humid process air condensates and the condensate is collected in a condensate tray 25. From the condensate tray 25, the condensate is pumped with the aid of a condensate pump 10 in a condensate duct 11 to a condensate container 12 which serves as a reservoir for cleaning liquid. In the embodiment shown herein, the condensate container 12 is connected with a domestic water supply 14. 13 refers to a valve.

Evaporator 19, throttle 20, liquefier 21 and compressor 22 are situated in a heat pump circuit, wherein a cooling agent circulates. The cooling agent which evaporated in the evaporator 19 is conducted via the compressor 22 to the liquefier 21. In liquefier 21 the cooling agent liquefies under heat transfer to the process air flowing in the process air channel 3. The then liquid cooling agent is led via the throttle 20 again to evaporator 19 whereby the cooling circuit 23 is closed.

The coated mesh sieve 2 consists of a pretreated basic sieve material 4 that is coated with a superhydrophobic coating 6.

A further coated mesh sieve 24 is provided in the condensate tray 25, i.e. essentially in a process water duct.

In the embodiment of Fig. 1, the coated mesh sieve 2 can be cleaned with an aqueous cleaning liquid which is stored in the condensate container 12. The cleaning liquid is thus here condensate and/or water from the domestic water supply 14. The cleaning liquid flows in a cleaning liquid duct 18 which leads to the condensate tray 25.

The operation of dryer 1 is controlled by means of a program control system 15 which can be operated through a user interface not shown here that allows a user to select a desired drying program and in particular to start a cleaning of the coated mesh sieve 2.

An acoustic and optic display device 16 enables a user of dryer 1 to display for example operational parameters and/or the expected duration of a drying process. The display device 16 indicates in particular the performing of a cleaning of the coated mesh sieve 2.

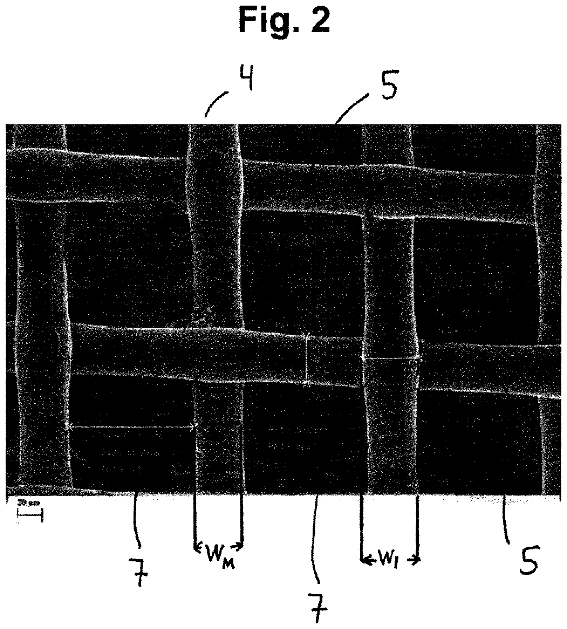

Fig. 2 shows an SEM (scanning electron micrograph) of the basic mesh sieve material 4 of a mesh sieve 2 according to the invention before pretreatment, wherein the basic mesh sieve material 4 is polyethyleneterephthalate.

The basic sieve material 4 contains a plurality of parallel wires 5, wherein a distance D between the wires 5 is from 80 to 100 $\mu$m. A width W of the wires 5 is in the range of from 20 to 50 $\mu$m. A width $w_I$ of the wires 5 is larger at an intersection 7 of the wires 5 as compared to a width $w_M$ in the middle between two intersections 7.

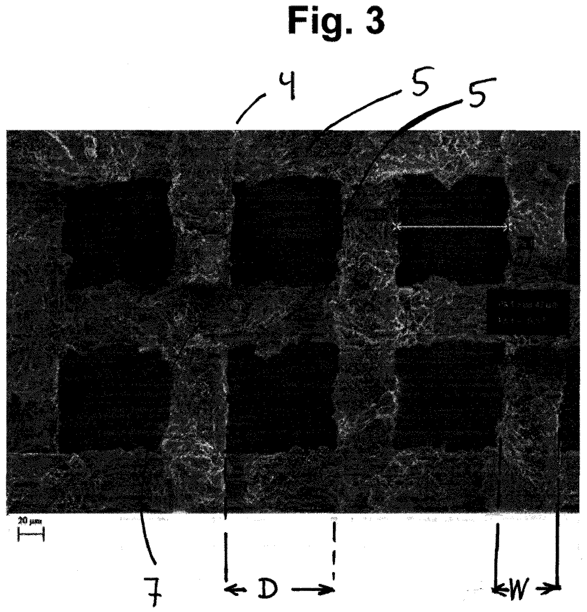

Fig. 3 shows the basic mesh sieve material 4 of Fig. 2 after a pretreatment by laser ablation has been carried out. The treatment with UV laser radiation has here led to a roughening of the surface of the wires 5.

**REFERENCE SIGNS**

1 Household appliance, water-bearing household appliance, dryer
2 coated mesh sieve
3 process water duct or process air duct
4 basic sieve material
5 wires
6 (super)hydrophobic or (super)hydrophilic coating
7 intersection (between wires)
8 container for items to be treated
9 laundry items
10 condensate pump
11 condensate duct
12 condensate container
13 valve
14 domestic water supply
15 program control system
16 acoustic and/or optic display device
17 process air blower
18 cleaning liquid duct
19 evaporator
20 throttle
21 liquefier
22 compressor
23 heat pump circuit; cooling circuit
24 mesh sieve in condensate tray
25 condensate tray

**Claims**

1. Household appliance (1), containing a coated mesh sieve (2) in a process water duct or a process air duct (3), wherein the coated mesh sieve (2) comprises

   a. a basic sieve material (4) in the form of wires (5); and
   b. a hydrophobic or hydrophilic coating (6) provided on the basic sieve material (4),

**characterized in that** the hydrophobic or hydrophilic coating (6) is provided on a pretreated surface of the basic sieve material (4), wherein the pretreated surface of the basic sieve material (4) is obtained by treating a metal as basic sieve material (4) with a cleaning solution containing an inorganic and/or organic chemical compound, or by treating an organic polymer as basic sieve material (4) with laser beams.

2. Household appliance (1) according to claim 1, wherein the basic sieve material (4) is a metal.

3. Household appliance (1) according to claim 2, wherein the metal is stainless steel.

4. Household appliance (1) according to claim 1, wherein the basic sieve material (4) is an organic polymer.

5. Household appliance (1) according to claim 4, wherein the basic sieve material (4) is polyethyleneterephthalate (PET).

6. Household appliance (1) according to any of claims 1 to 5, wherein the basic sieve material (4) contains essentially parallel wires (5), wherein a distance D between the wires (5) is from 50 to 150 $\mu$m, preferably from 65 to 130 $\mu$m, more preferably from 80 to 100 $\mu$m.

7. Household appliance (1) according to any of claims 1 to 6, wherein a width W of the wires (5) is in the range of from 10 to 70 $\mu$m, preferably of from 20 to 50 $\mu$m and most preferably of from 30 to 40 $\mu$m.

8. Household appliance (1) according to claim 6 or 7, wherein a width $w_I$ of the wires (5) is larger at an intersection (7) of the wires (5) as compared to a width $w_M$ in the middle between two intersections (7).

9. Household appliance (1) according to any of claims 1 to 8, wherein the hydrophobic or hydrophilic coating (6) has a thickness in the range of from 100 nm to 30 $\mu$m.

10. Household appliance (1) according to any of claims 1 to 9, wherein the hydrophobic or hydrophilic coating (6) contains or consists of an inorganic or organic polymer selected from among $SiO_2$-derivatives, fluoropolymers, $Al_2O_3$ derivatives, and $TiO_2$ derivatives.

11. Household appliance (1) according to any of claims 1 to 10, wherein the household appliance (1) is a water-bearing household appliance selected from the group consisting of a washing machine, a washer-dryer, a dryer and a dish-washer.

12. Coated mesh sieve (2) for a process water duct or a process air duct (3) in a household appliance (1), wherein the coated mesh sieve (2) comprises

    a. basic sieve material (4); and
    b. a hydrophobic or hydrophilic coating (6) provided on the basic sieve material (4),

    **characterized in that** the hydrophobic or hydrophilic coating (6) is provided on a pretreated surface of the basic sieve material (4), wherein the pretreated surface of the basic sieve material (4) is obtained by treating a metal as basic sieve material (4) with a cleaning solution containing an inorganic and/or organic chemical compound, or by treating an organic polymer as basic sieve material (4) with laser beams.

13. Process for the manufacture of a coated mesh according to claim 12, for a process water duct or a process air duct (3) in a household appliance (1), comprising the steps:

    (i) providing a mesh sieve (2) made from a basic sieve material (a) (4);
    (ii) pretreating the surface of an organic polymer as the basic sieve material (a)(4) with laser beams or the surface of a metal as the basic sieve material (a)(4) with a cleaning solution;
    (iii) allowing the pretreated surface to dry and/or harden; and
    (iv) coating the pretreated surface resulting from step (iii) with an inorganic or organic polymer.

14. Process according to claim 13, wherein the coating in step (iv) is effected by dip-coating, spraying, coil-coating or atmospheric pressure plasma.

**Patentansprüche**

1. Haushaltsgerät (1), das ein beschichtetes Maschensieb (2) in einer Brauchwasser- oder einer Brauchluftführung (3) enthält, wobei das beschichtete Maschensieb (2) Folgendes umfasst:

    a) ein Sieb-Grundmaterial (4) in Form von Drähten (5) und
    b) eine hydrophobe oder hydrophile Beschichtung (6) auf dem Sieb-Grundmaterial (4),

    **dadurch gekennzeichnet, dass** die hydrophobe oder hydrophile Beschichtung (6) auf einer vorbehandelten Oberfläche des Sieb-Grundmaterials (4) vorgesehen ist, wobei die vorbehandelte Oberfläche des Sieb-Grundmaterials (4) durch Behandeln eines Metalls als Sieb-Grundmaterial (4) mit einer Reinigungslösung, die eine anorganische und/oder eine organische chemische Verbindung enthält, oder durch Behandeln eines organischen Polymers als Sieb-Grundmaterial (4) mit Laserstrahlen erhalten wird.

2. Haushaltsgerät (1) nach Anspruch 1, wobei es sich bei dem Sieb-Grundmaterial (4) um ein Metall handelt.

3. Haushaltsgerät (1) nach Anspruch 2, wobei es sich bei dem Metall um Edelstahl handelt.

4. Haushaltsgerät (1) nach Anspruch 1, wobei es sich bei dem Sieb-Grundmaterial (4) um ein organisches Polymer handelt.

5. Haushaltsgerät (1) nach Anspruch 4, wobei es sich bei dem Sieb-Grundmaterial (4) um Polyethylenterephthalat (PET) handelt.

6. Haushaltsgerät (1) nach einem der Ansprüche 1 bis 5, wobei das Sieb-Grundmaterial (4) im Wesentlichen parallele Drähte (5) enthält, wobei ein Abstand D zwischen den Drähten (5) 50 bis 150 $\mu$m, vorzugsweise 65 bis 130 $\mu$m, bevorzugt 80 bis 100 $\mu$m beträgt.

7. Haushaltsgerät (1) nach einem der Ansprüche 1 bis 6, wobei eine Breite W der Drähte (5) im Bereich von 10 bis 70 $\mu$m, vorzugsweise 20 bis 50 $\mu$m und besonders bevorzugt 30 bis 40 $\mu$m liegt.

8. Haushaltsgerät (1) nach Anspruch 6 oder 7, wobei eine Breite $w_I$ der Drähte (5) an einer Schnittstelle (7) der Drähte (5) größer ist als eine Breite $w_M$ in der Mitte zwischen zwei Schnittstellen (7).

9. Haushaltsgerät (1) nach einem der Ansprüche 1 bis 8, wobei die hydrophobe oder hydrophile Beschichtung (6) eine Dicke aufweist, die im Bereich von 100 nm bis 30 $\mu$m liegt.

10. Haushaltsgerät (1) nach einem der Ansprüche 1 bis 9, wobei die hydrophobe oder hydrophile Beschichtung (6) ein anorganisches oder ein organisches Polymer enthält, das unter $SiO_2$-Derivaten, Fluorpolymeren, $Al_2O_3$-Derivaten und $TiO_2$-Derivaten ausgewählt ist, oder daraus besteht.

11. Haushaltsgerät (1) nach einem der Ansprüche 1 bis 10, wobei es sich bei dem Haushaltsgerät (1) um ein wasserführendes Haushaltsgerät handelt, das aus der Gruppe ausgewählt ist, die aus einer Waschmaschine, einem Waschtrockner, einem Trockner und einem Geschirrspüler besteht.

12. Beschichtetes Maschensieb (2) für eine Brauchwasser- oder eine Brauchluftführung (3) in einem Haushaltsgerät (1), wobei das beschichtete Maschensieb (2) Folgendes umfasst:

    a) ein Sieb-Grundmaterial (4) und
    b) eine hydrophobe oder hydrophile Beschichtung (6) auf dem Sieb-Grundmaterial (4),

**dadurch gekennzeichnet, dass** die hydrophobe oder hydrophile Beschichtung (6) auf einer vorbehandelten Oberfläche des Sieb-Grundmaterials (4) vorgesehen ist, wobei die vorbehandelte Oberfläche des Sieb-Grundmaterials (4) durch Behandeln eines Metalls als Sieb-Grundmaterial (4) mit einer Reinigungslösung, die eine anorganische und/oder eine organische chemische Verbindung enthält, oder durch Behandeln eines organischen Polymers als Sieb-Grundmaterial (4) mit Laserstrahlen erhalten wird.

13. Verfahren zur Herstellung eines beschichteten Maschengewebes nach Anspruch 12 für eine Brauchwasser- oder eine Brauchluftführung (3) in einem Haushaltsgerät (1), das folgende Schritte umfasst:

    (i) Bereitstellen eines Maschensiebs (2), das aus einem Sieb-Grundmaterial (a) (4) hergestellt ist,
    (ii) Vorbehandeln der Oberfläche eines organischen Polymers als Sieb-Grundmaterial (a) (4) mit Laserstrahlen oder der Oberfläche eines Metalls als Sieb-Grundmaterial (a) (4) mit einer Reinigungslösung,
    (iii) Trocknen- und/oder Aushärtenlassen der vorbehandelten Oberfläche und
    (iv) Beschichten der vorbehandelten Oberfläche aus Schritt (iii) mit einem anorganischen oder einem organischen Polymer.

14. Verfahren nach Anspruch 13, wobei die Beschichtung in Schritt (iv) durch Tauchbeschichten, Spritzen, Bandbeschichten oder Atmosphärendruck-Plasma erfolgt.

**Revendications**

1. Appareil ménager (1), comportant un tamis à mailles revêtu (2) dans un conduit d'eau de traitement ou un conduit d'air de traitement (3), dans lequel le tamis à mailles revêtu (2) comprend :

    a. un matériau de base de tamis (4) sous forme de fils (5), et
    b. un revêtement hydrophobe ou hydrophile (6) disposé sur le matériau de base de tamis (4),

**caractérisé en ce que** le revêtement hydrophobe ou hydrophile (6) est disposé sur une surface prétraitée du matériau de base de tamis (4), la surface prétraitée du matériau de base de tamis (4) étant obtenue par traitement d'un métal en tant que matériau de base de tamis (4) avec une solution de nettoyage contenant un composé chimique inorganique et/ou organique, ou par traitement d'un polymère organique en tant que matériau de base (4) avec des faisceaux laser.

2. Appareil ménager (1) selon la revendication 1, dans lequel le matériau de base de tamis (4) est un métal.

3. Appareil ménager (1) selon la revendication 2, dans lequel le métal est de l'acier inoxydable.

4. Appareil ménager (1) selon la revendication 1, dans lequel le matériau de base de tamis (4) est un polymère organique.

5. Appareil ménager (1) selon la revendication 4, dans lequel le matériau de base de tamis (4) est du polyéthylène téréphtalate (PET).

6. Appareil ménager (1) selon l'une quelconque des revendications 1 à 5, dans lequel le matériau de base de tamis (4) contient essentiellement des fils parallèles, dans lequel la distance D entre les fils (5) est de 50 $\mu$m à 150 $\mu$m, de préférence de 65 $\mu$m à 130 $\mu$m et de manière plus préférée de 80 $\mu$m à 100 $\mu$m.

7. Appareil ménager (1) selon l'une quelconque des revendications 1 à 6, dans lequel la largeur (W) des fils (5) est de 10 $\mu$m à 70 $\mu$m, de préférence de 20 $\mu$m à 50 $\mu$m et de manière plus préférée de 30 $\mu$m à 40 $\mu$m.

8. Appareil ménager (1) selon la revendication 6 ou 7, dans lequel une largeur $w_I$ des fils (5) est plus grande au niveau de l'intersection (7) des fils (5) que la largeur $w_M$ dans le milieu entre deux intersections (7).

9. Appareil ménager (1) selon l'une quelconque des revendications 1 à 8, dans lequel le revêtement hydrophobe ou hydrophile (6) a une épaisseur de 100 nm à 30 $\mu$m.

10. Appareil ménager (1) selon l'une quelconque des revendications 1 à 9, dans lequel le revêtement hydrophobe ou hydrophile (6) contient ou consiste en un polymère inorganique ou organique sélectionné parmi des dérivés de $SiO_2$, des fluoropolymères, des dérivés d'$Al_2O_3$ et des dérivés de $TiO_2$.

11. Appareil ménager (1) selon l'une quelconque des revendications 1 à 10, dans lequel l'appareil ménager est un appareil ménager acheminant de l'eau sélectionné dans le groupe comprenant une machine à laver, une laveuse-sécheuse, un sèche-linge et un lave-vaisselle.

12. Tamis à mailles revêtu (2) pour un conduit d'eau de traitement ou un conduit d'air de traitement (3) dans un appareil ménager (1), dans lequel le tamis à mailles revêtu (2) comprend :

 a. un matériau de base de tamis (4), et
 b. un revêtement hydrophobe ou hydrophile (6) disposé sur le matériau de base de tamis (4),

**caractérisé en ce que** le revêtement hydrophobe ou hydrophile (6) est disposé sur une surface prétraitée du matériau de base de tamis (4), la surface prétraitée du matériau de base de tamis (4) étant obtenue par traitement d'un métal en tant que matériau de base de tamis (4) avec une solution de nettoyage contenant un composé chimique inorganique et/ou organique, ou par traitement d'un polymère organique en tant que matériau de base de tamis (4) avec des faisceaux laser.

13. Procédé de fabrication d'un tamis à mailles revêtu selon la revendication 12, pour un conduit d'eau de traitement ou un conduit d'air de traitement (3) dans un appareil ménager (1),
comprenant les étapes consistant à :

 (i) fournir un tamis à mailles (2) constitué d'un matériau de base de tamis (a) (4),
 (ii) prétraiter la surface d'un polymère organique en tant que matériau de base de tamis (a) (4) avec des faisceaux laser ou la surface d'un métal en tant que matériau de base de tamis (a) (4) avec une solution de nettoyage,
 (iii) faire sécher et/ou durcir la surface prétraitée, et
 (iv) revêtir la surface prétraitée obtenue après l'étape (iii) avec un polymère inorganique ou organique.

14. Procédé selon la revendication 13, dans lequel le revêtement à l'étape (iv) est réalisé par revêtement au trempé, pulvérisation, enduction de bande en continu ou par plasma à pression atmosphérique.

# Fig. 1

# Fig. 2

# Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20050252022 A1
- WO 2008077394 A2
- EP 1674535 A1
- EP 0825230 A1
- US 20080276656 A
- EP 2202348 A2
- DE 102011089114 A1
- DE 102009046921 A1
- US 20100154240 A1